# EUROPEAN PATENT SPECIFICATION

(11) **EP 4 448 836 B1**
(45) Date of publication and mention of the grant of the patent: **17.06.2026**
(21) Application number: 22850613.5
(22) Date of filing: 16.12.2022
(51) Int. Cl.: C25B 1/01, C25B 1/50, C25B 15/029, C25B 15/033, C02F 1/463, C02F 1/52

(54) **A METHOD OF PRODUCING METAL HYDROXIDES IN CONTROLLED PURITY GRADES SUITABLE FOR THE PRODUCTION OF CERAMIC MATERIALS**
VERFAHREN ZUR HERSTELLUNG VON METALLHYDROXIDEN IN KONTROLLIERTEN REINHEITSQUALITÄTEN ZUR HERSTELLUNG VON KERAMIKMATERIALIEN
PROCÉDÉ DE PRODUCTION D'HYDROXYDES MÉTALLIQUES À DES DEGRÉS DE PURETÉ MAÎTRISÉS CONVENANT À LA PRODUCTION DE MATÉRIAUX CÉRAMIQUES

(30) Priority: 16.12.2021 SK 500652021
(43) Date of publication of application: 23.10.2024
(73) Proprietor: Hofitech S.R.O., 929 01 Dunajska Streda (SK)
(72) Inventor: HORVATH, Gabriel, 929 01 Dunajska Streda (SK); SZALAY, Zsolt, 931 01 Samorin - Mliecno (SK); KUCSERA, Denes, 841 08 Bratislava-Devinska Nova Ves (SK); SIMO, Frantisek, 851 07 Bratislava (SK)
(74) Representative: Majlingová, Zuzana
(86) International application number: PCT/SK2022/050013
(87) International publication number: WO 2023/113703

(56) References cited:
- CN-A- 106 115 988
- GB-A- 2 494 299
- KR-A- 20030 095 559
- US-A1- 2018 148 374

## Description

### Technical Field

The invention relates to the field of metal hydroxides production by electrolysis suitable for the production of ceramic materials.

### Background Art

There is known the method of ceramic materials production including electrolysis of a metal of a consumable electrode in an aqueous solution, separation of the metal hydroxide from the aqueous solution, and thermal treatment thereof. This method is carried out exclusively in pure water, i.e. the water used in the production process must be supplied with a minimum concentration of contaminants in the form of distilled, deionised water. For example, patent CZ306727B6 relates to the preparation of aluminium oxide by the process of anodic dissolution of aluminium in an aqueous solution of ammonium chloride. The product of the electrolysis is aluminium hydroxide, which after electrolysis is separated from the solution and further subjected to thermal treatment to form aluminium oxide. The high purity of the aluminium oxide is conditional upon the high purity of the aluminium, the high purity of the water used in the solution as in the purification of the aluminium oxide. Another document, WO1995006006A1, describes a process for the formation of metal hydroxides in wastewater treatment (electrocoagulation). These hydroxides are created in small quantities and solely for the purpose of binding contaminants, with no concept for further valorisation; it is therefore assumed that they will be disposed of as solid waste.

GB 2 494 299 A discloses an electrocoagulation method for removing contaminants e.g. metal ion from water, in which the liquid introduced into the electrochemical cell is formed from a side-stream of the waste effluent stream.

However, the use of contaminated water in the production of ceramic materials may be attractive from the point of view of applying the principles of circular economy. Such an approach was taken in the publication Horvath, G., et al. "Recycling of a wastewater to iron oxide micro structures." Environmental Research Communications 1.8 (2019): 085001. In the paper, the authors describe the production of iron oxides by thermal treatment of iron hydroxide containing impurities, which was produced by electrochemical treatment of mildly polluted wastewater in a cylindrical electrochemical flow reactor. The homogeneity of the output iron oxides was ensured by filtering the inlet wastewater for solid particles.

The chosen method of iron hydroxide production proceeds in an uncontrolled manner and it is therefore problematic to reproduce these results in a scaled-up process. Due to the small size of the reactor and the small water volume, the long continuous operation of the electrolysis changes the electrical, chemical, and hydraulic conditions of the process over time. These are not monitored or used for process control, which may have an impact on the properties of the iron oxide outputs. Likewise, the generated iron hydroxide sludge with bound contaminants, the amount of which increases continuously with the duration of the electrolysis, is repeatedly pumped through the electrochemical reactor together with the wastewater. The entire volume of the wastewater, including the sludge generated, is thus repeatedly subjected to electrochemical processes, which reduces electrical efficiency because the proportion of the electrical energy consumed for the electrochemical reactions of the contaminants in the water is preserved. This efficiency would be further reduced when using water with higher concentrations of contaminants, in which case there are also added problems associated with fouling and clogging caused by prolonged contact of contaminants with the surfaces of the equipment components.

The authors increased the electrical conductivity and thus the energy efficiency of the process by adding the additive NaCl. However, large-scale industrial application of the described step is not economical; it would require significant quantities of NaCl additive as well as additional costs for treatment or disposal of large volumes of treated wastewater with a high additive content.

The aim of the present invention is to develop a method for producing the products for manufacturing of ceramic materials which does not have the above deficiencies, which is applicable over a wide range of contaminant concentrations in water, which is controlled, and which is easy on equipment operation and maintenance.

### Summary of Invention

The methods of claims 1 and 6 according to the present invention allows controlled and graduated production of metal hydroxides in different purity grades suitable for the production of ceramic materials.

The summary of the invention consists in a first aspect in a method for producing metal hydroxides in controlled purity grades from water having a contaminant concentration in the range of 0.1 to 500 g/l, comprising the process steps:
a) dividing water of a total volume V into V1 : V2 in a ratio of 1 : 3 to 1 : 100, wherein V1 is an active water volume and V2 is a passive water volume;
b) the first electrolysis of the active water volume with an electrical conductivity (σ) of at minimum 0.5 mS/cm using at least one consumable metal electrode-anode, to form a metal hydroxide with bound contaminants in the treated active water volume; wherein electrolysis proceeds until the mass ratio of metal from the consumable electrode to the bound contaminants is 0.1 : 1 to 100 : 1, wherein the specific time of the first electrolysis is obtained by a standard method of calibrating the unit water volume, wherein the dependence of the purity grade of the product, the concentration of contaminants in the water, and the mass of metal released from the consumable electrode is determined; and
c) separation of the metal hydroxide with bound contaminants from the treated active water volume to form the first product P1 and the treated active water volume;
d) mixing the first product P1 with the passive water volume, to form metal hydroxide with bound contaminants in the treated passive water volume;
e) separation of metal hydroxide with bound contaminants from the treated passive water volume to form the second product P2 and the treated passive water volume;
f) a second electrolysis of the treated passive water volume, using at least one consumable metal electrode-anode, to form metal hydroxide with bound contaminants in the final treated passive water volume; wherein the electrolysis proceeds until the mass ratio of metal from the consumable electrode to the bound contaminants is 0.1 : 1 to 100 : 1, wherein the specific time of the second electrolysis is obtained by a standard method of calibrating the unit water volume, wherein the dependence of the purity grade of the product, the concentration of contaminants in the water, and the mass of metal released from the consumable electrode is determined; and
g) separation of the metal hydroxide with bound contaminants from the final treated passive water volume to form the volume product P3 and the final treated passive water volume.

An advantage of dividing the total water volume into a smaller active volume and a larger passive volume is that the active components of the equipment used in the process will only be in contact with this small active volume V1 with the initial (maximum) contamination, which is largely removed already during the first electrolysis of the active volume. In the following steps, only residual pollution is then present, which does not pose a problem in terms of the equipment's operation and lifetime. Thus, a shorter contact time with higher concentrations of contamination is ensured, and by early removing of a large share of the contamination, a higher average energy efficiency of metal hydroxide generation during electrolysis is achieved, wherein the proportion of electrical energy consumed for electrochemical reactions of contaminants in the water is reduced. The lifetime of the various structural elements and equipment used in the process (pipes, valves, pumps, probes, etc.) is also extended. The time between periodic maintenance is also extended, due to less fouling of the internal surfaces of the components and equipment used in the process and lower back-contamination of the volume by the release of contaminants from deposits. It also reduces the failure rate of equipment caused by fouling, e.g. obstruction and clogging of valves, pipes, probes, electrical shorting of electrodes from deposits, etc.

By producing the first product P1 with a high metal content in the active volume and mixing it into the passive volume, a large part of the initial concentration of contaminants is simultaneously removed from the passive volume without electrolysis, thereby saving electricity. The contaminants present in the passive volume are bound to the free surface of the first product P1, thereby reducing the contamination of the passive volume prior to the second electrolysis. Residual contamination (much lower than the initial contamination) is then removed from the passive water volume.

The above method can thus be used secondarily for treatment of wastewater for further industrial use. It is also possible to use wastewater from industrial production or from households as input water for the process according to the invention. Prior to the process, it is advisable to apply standard methods of filtering course impurities (macroscopic contamination). The method according to the present invention purifies the wastewater of contaminants. The method can thus be used for wastewater treatment.

Water with contaminant concentrations in the range of 0.1 to 500 g/l can enter the process. Contaminants may be a variety of organic and/or inorganic compounds, which may further be water soluble and/or water insoluble. For the purpose of process monitoring and regulation, the mass of contaminants in the water can be obtained by calibration using established analytical methods and indicators such as chemical oxygen demand, total organic carbon, dissolved solids, suspended solids, turbidity, pH, electrical conductivity, etc.

According to a preferred embodiment, the treated active water volume from step (c) is repeatedly subjected to steps (b) to (e) 1 to *n* times, where *n is* an integer selected from the interval 2 to 100, preferably 10, to form the second products P2.1 to P2.n, to be followed by steps (f) and (g) to form the third product P3. The reason is that there is a reduced concentration of contaminants in both the treated active volume and the treated passive volume, which is further reduced with each subsequent cycle, and therefore a high mass ratio of metal from the consumable electrode to the bound contaminants is achieved, as well as a higher energy efficiency of generating the second products P2.1 to P2.n. This also means that each subsequent second product P2.x product is at least as pure or purer than the previous P2.x-1.

Preferably, in the first repetition and every subsequent repetition of steps (b) to (e), the first electrolysis in step (b) can take place until the mass ratio of the metal from the consumable electrode to the bound contaminants reaches a value in the range of 1 : 1 to 2000 : 1.

According to another embodiment, a part of the treated passive water volume obtained in step (e) can be added to the first electrolysis process (step (b)) or to the treated active water volume obtained in step (c). Replenishment may be continuous, with a rate corresponding to the loss of active water volume during electrolysis in step (b). Continuous replenishment is suitable for compensating for the loss of water consumed during the formation of metal hydroxides. Alternatively, a one-time replenishment of water at a volume corresponding to the loss of active water volume after step (c) is possible. This is suitable for compensating for the loss of water during both product separation and product formation.

According to a further preferred embodiment, the treated active water volume from step (c) can be mixed with the treated passive water volume obtained in step (e) - prior to the second electrolysis process. This option is particularly applicable prior to final treatment after repeated cycles where no or little additive has been added to the active water volume.

According to a further preferred embodiment, the treated active water volume from step (c) is repeatedly subjected to steps (b) to (c) 1 to *n* times, where *n is* an integer selected from the interval 2 to 100, preferably 2 to 10, to form the first products P1.1 to P1.n. These first products P1.1 to P1.n are suitable for the production of ceramic materials. The reason is that there is a reduced concentration of contaminants in the treated active volume, which is further reduced with each subsequent cycle, and therefore a high mass ratio of metal from the consumable electrode to the bound contaminants is achieved, as well as a higher energy efficiency of generating the first products P1.1 to P1.n.

Preferably, in the first repetition and each subsequent repetition of steps (b) to (c), the first electrolysis in step (b) can be carried out until the mass ratio of metal from the consumable electrode to the bound contaminants reaches a value in the range of 1 : 1 to 2000 : 1.

According to a further preferred embodiment, the treated active water volume together with the metal hydroxide with bound contaminants (slurry) is mixed with the passive water volume to form the second product P2 and the treated total water volume. This step also reduces the contaminant content of the treated total water volume without electrolysis, thereby saving electricity and reducing wear and tear on the equipment used in the subsequent process. This option is particularly applicable when no or little additive has been added to the active water.

Subsequently, the correspondingly modified steps (e) to (g) are performed:
e) separation of the metal hydroxide with bound contaminants from the treated total water volume to form the second product P2 and the treated total water volume;
f) a second electrolysis of the treated total water volume, using at least one consumable metal electrode-anode, to form metal hydroxide with bound contaminants in the final treated total water volume; wherein the electrolysis is carried out until the mass ratio of metal from the consumable electrode to the bound contaminants is 0.1 : 1 to 100 : 1; and
g) separation of the metal hydroxide with bound contaminants from the final treated total water volume to form the third product P3 and the final treated total water volume.

Alternatively, the treated active water volume from step (c) and/or the final passive water volume from step (g) and/or the final total water volume can be discharged as purified water suitable for further use. Where further use is understood to mean purification by known methods or direct use in another process, for example, it may be used as the active volume in the next input volume V of the method according to the present invention, or discharged to sewers (if it meets legislative standards).

If the water entering the process has the electrical conductivity less than 0.5 mS/cm, the course of electrolysis could be problematic. For this reason, an additive can be added to the active water volume before or during step (b) to increase the electrical conductivity of the water to a level of at least 0.5 mS/cm, preferably to a level of 5 mS/cm to 100 mS/cm. The additive can be, for example, NaCl, Na₂CO₃ or Na₂SO₄ or any combination thereof. The addition of an additive to the active volume V1 improves the energy and/or electrochemical efficiency of the process. Also, in a small active volume V1, a significantly smaller total amount of additive is needed than if the additive were added in the same proportion to the entire volume V. This brings direct cost savings, and also simplifies the handling of the treated water after the process. Only a small treated active volume with a higher additive concentration remains at the outlet and/or a significantly lower total additive concentration is achieved in the final treated passive volume or the final treated total volume with the possibility of direct discharge to sewers.

The consumable electrode-anode is made of a metal selected from a group including Fe, Al, Zn, Mg, Cu, and alloys thereof, preferably Al, even more preferably Fe. The purity of the metal raw material directly limits the maximum attainable purity grade of the product. Of the alloys, the most suitable are e.g. carbon steels or aluminium from the 1xxx alloy series.

The second electrode can be consumable or non-consumable.

Basic process steps of the invention:
The supplied total water volume V is divided at the inlet into a smaller active volume V1, which is fed into a separate circuit where it is subjected to electrolysis, and the remaining passive volume V2, wherein the V1 : V2 ratio is 1 : 3 to 1 : 100 (step (a)). The active volume is subjected to the first electrolysis and is enriched with the metal hydroxide generated. The generated metal hydroxide binds contaminants to itself from the active volume V1 to form the first product P1 in the treated active water volume. The addition of an additive to the active volume V1 at the beginning of step (b) increases the energy and/or electrochemical efficiency of the process.

The first product P1 thus generated is separated from the treated active volume (step (c)) and subsequently mixed with the passive volume V2 (step (d)), from which a further part of contaminants is bound to the metal hydroxide to form the second product P2.

The second product P2 composed of the metal hydroxide with bound contaminants is separated from the treated passive volume by standard methods (step e)). The second product P2 formed in the initial treatment (steps (b) to (e)) will have a lower purity grade, i.e. lower mass ratio of metal from the electrode to the bound contaminants.

A substantial portion of the contaminants is removed from both the treated active volume and the treated passive volume after the initial treatment. By repeated cycles, i.e. by repeating steps (b) to (e), the residual contaminant concentration will further decrease in a graduated manner and therefore second products P2.1 to P2.n with a graduated purity grade and higher purity grade (i.e. a higher mass ratio of metal from the electrode to the bound contaminants) will be formed. The number of cycles will be selected based on requirements for purity and volume of the products for the production of ceramic materials. If requirements are less stringent, product production can be focused in the basic process without repeated cycles.

The generation of the second product P2 is followed by a final treatment of the treated passive volume (step (f)), wherein the treated passive volume is subjected to a second electrolysis and is enriched with the generated metal hydroxide. The generated metal hydroxide binds contaminants from the treated passive volume to itself to form the third product P3. The third product P3 from the final treatment (step (f)) is typically generated in smaller quantities and at lower purity grades, i.e. lower mass ratio of metal from the electrode to the bound contaminants. The third product P3 is separated from the final treated passive volume (step (g)), and the final treated passive volume can be discharged for further use.

Alternatively, the treated active volume and passive volume V2 may be mixed prior to step (d), and then further work with this treated total volume thereafter in steps (d) to (g). This variant is preferred in the case where no or little additive has been added to the active volume.

Optionally, a part of the treated passive water volume obtained in step (e) may be further added to the first electrolysis process (step (b)) or to the treated active water volume obtained in step (c). The reason for this is that during the separation of the first product P1 and the second product P2, there is a certain loss of the treated active volume and the treated passive volume, respectively, and which water volume remains bound to the product. The degree of volume loss depends on the quality of the chosen separation method. At the same time, the formation of the metal hydroxide consumes water in the stoichiometric ratio of the chemical reaction, and thus the maximum product yield is related to the available water volume during steps (b) and (f). Replenishment may thus be continuous, with a rate corresponding to the loss of active water volume during the first electrolysis in step (b). Alternatively, a one-time replenishment of water at a rate corresponding to the loss of active water volume after step (c) is possible.

From the products P1 to P3, it is possible to further produce ceramic materials of selected properties according to the intended use and the required purity of each of these materials using standard methods. Standard methods include in particular:
- Processing the product for further treatment (crushing, grinding, sieving, washing in solution, drying, etc.);
- Thermal treatment of the product (firing in a furnace, spray synthesis, pyrolysis, etc.);
- Final treatment of the ceramic material produced (crushing, grinding, sieving, washing in solution, drying, etc.).

The process is normally calibrated for the selected water type in a series of small-volume tests with the configuration of equipment and operating parameters used in the process (volume, flow rates, temperature, electrode surface area, etc.).

The input concentration of contaminants and the type of contaminants differ for different types of input water. The composition of water with contaminants is described by several indicators, depending on its type: chemical oxygen demand (COD) is usually sufficient, or total organic carbon (TOC), and also total suspended solids (TSS), and total dissolved solids (TDS). The purity grade of the product (i.e. the mass of metal in the product and the mass of bound contaminants in the product) is obtained by standard methods of analytical chemistry.

The specific time of the first electrolysis is obtained by standard method of process calibration in a unit water volume, wherein the following are determined:
I. functional dependence of the purity grade of the product P1 on the concentration of contaminants in the active volume and the mass of metal released from the consumable electrode;
II. functional dependence of the purity grade of the product P2 on the concentration of contaminants in the passive volume, the mass of the metal released by the consumable electrode in the mixed product P1, and the purity grade of the product P1.

The specific time of the second electrolysis is obtained by standard method of process calibration in a unit water volume, wherein the following is determined:
III. dependence of the purity grade of the product P3, the concentration of contaminants in the treated passive volume, and the mass of metal released from the consumable electrode.

The mass of metal released from the electrode during electrolysis is pre-calibrated in a unit volume of contaminant-free water against Faraday's law of electrolysis (electric current, electrolysis time, current efficiency) for the value of electric current used in the process.

Tests of electrolysis of unit volumes of water with contaminants are performed by way of sampling of product P1 and of treated water at defined time intervals. Similarly, tests of electrolysis of unit volumes of water with contaminants are performed by way of sampling of product P3 and of treated water at defined time intervals.

Finally, tests of mixing pure metal hydroxide (produced by electrolysis in pure water) and P1 products and water volumes with contaminants in different ratios are performed, followed by sampling of product P2 and of treated water.

The concentration of contaminants in water is usually quantified using chemical oxygen demand (a basic indicator; contamination tends to be predominantly of an organic nature). The purity grade of the product P1 to P3 (i.e. the mass of the metal in the product and the mass of bound contaminants in the product) can be efficiently obtained by instrumental analysis (e.g. a combination of SEM-EDS/WDS and Raman spectroscopy) or an equivalent method.

A calibration curve of the purity grade of products P1 to P3 against the chemical oxygen demand and the mass of metal released from the electrode is created on the basis of the measured inputs.

The process is controlled on the basis of the calibration curve, or multiple calibration curves (multiple working configurations). Additionally, the process can be controlled and adjusted in real time according to selected indicators of contaminant concentration in the water.

### Brief Description of Drawings

Figure 1 is a schematic diagram of the basic production process of products according to the present invention.
Figure 2 is a schematic diagram of the graduated production process for products according to the present invention with repeated cycles.
Figure 3 is a schematic diagram of the production process presented in example 1.
Figure 4 is a schematic diagram of the production process presented in example 2.
Figure 5 depicts an example of a calibration curve for the first product P1, P1.1.

### Examples

### Example 1

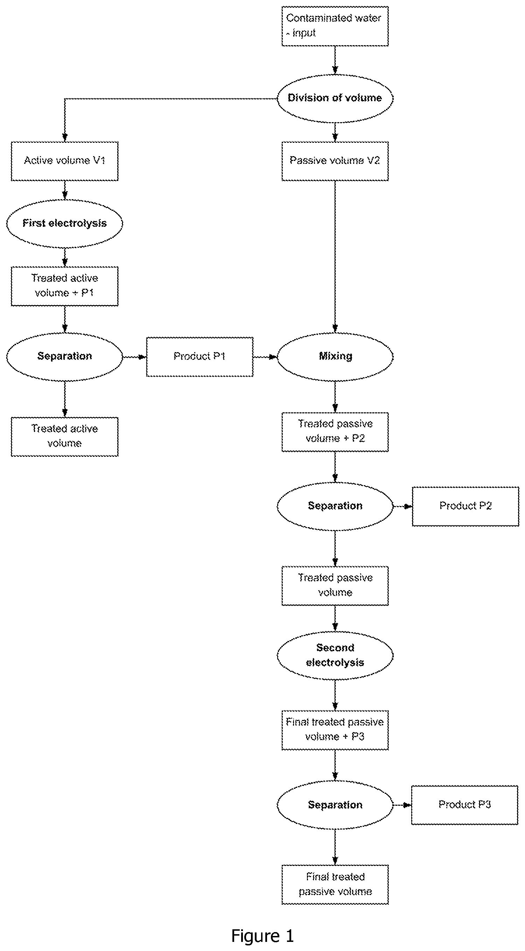

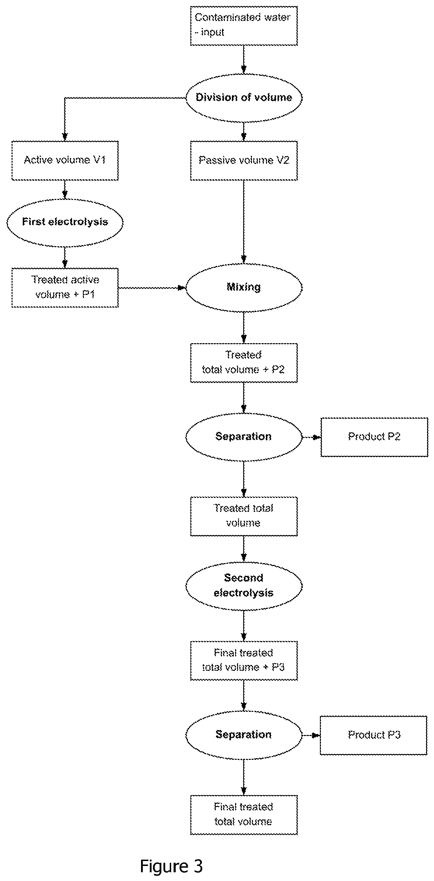

The basic process of the production of metal hydroxide (figure 1 and 3).

Wastewater with a contaminant concentration of 132 g/l of a mixture of organic pollution and dissolved inorganic substances, volume V = 1 000 l is divided into V1 and V2 in a ratio of 1 : 9, wherein V1 is the active water volume, and V2 is the passive water volume. Wastewater has an electrical conductivity of 77 mS/cm; therefore no additive is added.

The initial treatment of the active volume and the passive volume is aimed at removing a substantial concentration of contaminants under the conditions of using an optimal amount of metal and an adequate output purity grade.

The active volume is subjected to a first electrolysis using a Fe electrode, where the electrolysis is completed after the release of 27.5 kg of Fe from the consumable electrode into the active volume to produce an equivalent mass of iron hydroxides. The generated iron hydroxide binds 52% of the contaminants from the active volume to form the first product P1 (the mass ratio of the metal from the consumable electrode to the bound contaminants is 4 : 1).

Subsequently, the slurry of the first product P1 and the treated active volume V1 is mixed with the passive volume V2. The concentration of contaminants in the total volume is reduced by 46% to create the second product P2 (the mass ratio of metal from the consumable electrode to the bound contaminants is 0.45 : 1). This second product P2 is separated from the treated total volume by standard methods.

The final treatment of the treated total water volume is aimed at removing the residual amount of contaminants with such a metal content that achieves an equal or higher output purity of product than was achieved in the first electrolysis.

The treated total water volume is subjected to a second electrolysis using an Fe electrode, wherein the electrolysis is terminated after 25.1 kg of Fe has been released from the consumable electrode into the treated total volume to give an equivalent mass of iron hydroxides. The iron hydroxides generated bind 14% of the contaminants from the treated total water volume to form the third product P3 (the mass ratio of metal from the consumable electrode to the bound contaminants is 2.45 : 1). This third product P3 is separated from the final treated total volume water volume by standard methods.

From the product P2 it is possible, using standard methods, to obtain Fe₂O₃ with a mass fraction of at least 66%, and from the product P3 it is possible, using standard methods, to obtain a product of Fe₂O₃ with a mass fraction of at least 90%.

### Example 2

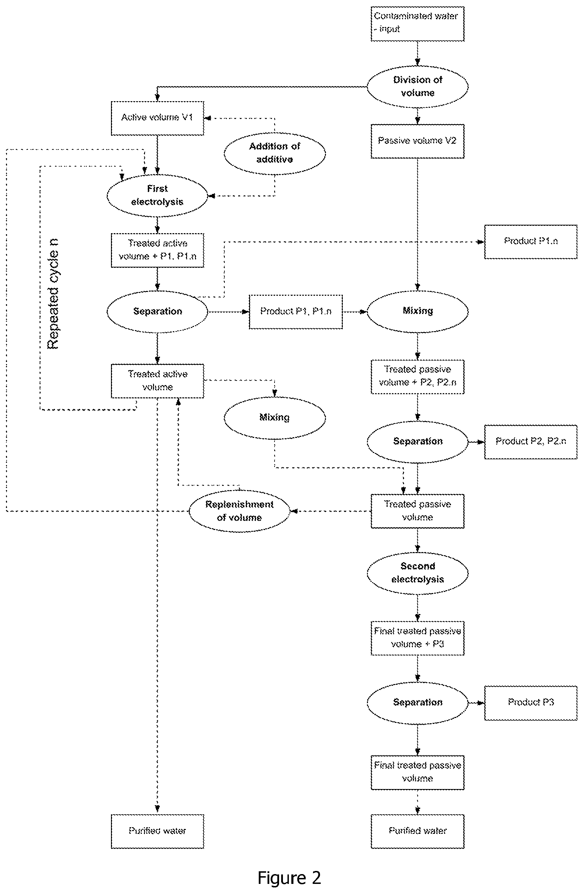

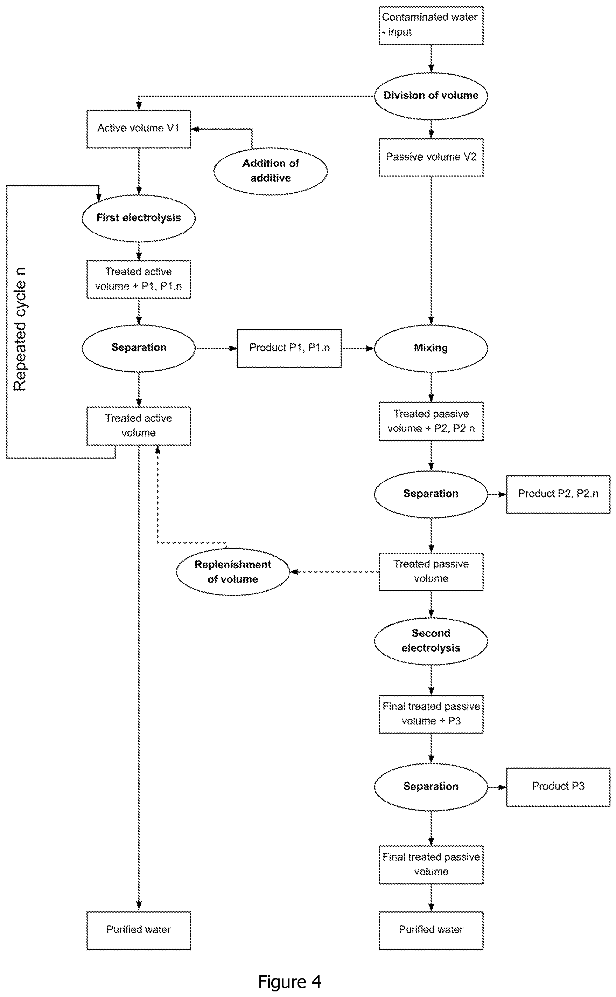

Graduated production process of metal hydroxide (with repeated cycles) (figure 2 and 4).

Wastewater with a contaminant concentration of 2.7 g/l of predominantly organic nature, volume V = 10 000 l is divided into V1 and V2 in a ratio of 5 : 95, wherein V1 is the active water volume and V2 is the passive water volume. The additive Na₂CO₃ is added to the active volume V1 in such an amount as to increase the electrical conductivity to 20 mS/cm.

The initial treatment of the active volume and the passive volume is aimed at removing a substantial concentration of contaminants, while using as little metal as possible and achieving an appropriate purity grade of the product.

The active volume is subjected to a first electrolysis using an Al electrode, wherein the electrolysis is terminated after the release of 0.8 kg of Al from the consumable electrode into the active volume to produce an equivalent mass of aluminium hydroxide. The generated aluminium hydroxide binds 69% of the contaminants from the active volume to form the first product P1 (the mass ratio of metal from the consumable electrode to the bound contaminants is 0.85 : 1).

Subsequently, the first product P1 is separated from the treated active volume V1 and mixed with the passive volume V2. The concentration of contaminants in the passive volume V2 will be reduced by 14%, resulting in the product P2 (the mass ratio of the metal from the consumable electrode to the bound contaminants is 0.18 : 1) This product P2 is separated from the treated passive volume V2 by standard methods.

The first repeated cycle (Cycle 1) is focused on pre-treatment of the water for the production of a high-quality product, by additionally removing as many contaminants as possible, and achieving a higher purity grade of product.

The treated active volume is subjected to a first electrolysis using an Al electrode, wherein the electrolysis is terminated after the release of 2.9 kg of Al from the consumable electrode into the treated active volume to produce an equivalent mass of aluminium hydroxide. The generated aluminium hydroxide binds 89% of the remaining amount of contaminants from the treated active volume to form the first product P1.1 (the mass ratio of metal from the consumable electrode to the bound contaminants is 1500 : 1; the purity is still limited by the back-contamination of the volume by the release of contaminants from the deposits).

Subsequently, the first product P1.1 is separated from the treated active volume and mixed with the treated passive volume. The residual concentration of contaminants in the treated passive volume is reduced by 31% to give product P2.1 (the mass ratio of metal from the consumable electrodes to the bound contaminants is 0.4 : 1). This P2.1 product is separated from the treated passive volume by standard methods.

The second repeated cycle (Cycle 2) is focused on preparation of a high-quality product. High purity can be achieved because the concentration of contaminants has already been reduced to the minimum achievable level by the two electrolyses in the treated active volume, and at the same time the exclusive action of the product (without electrochemical treatment) already results in the binding of only a small amount of contaminants from the treated passive volume.

The treated active volume is subjected to a first electrolysis using an Al electrode, wherein the electrolysis is terminated after the release of 80 kg of Al from the consumable electrode into the treated active volume to produce an equivalent mass of aluminium hydroxide. The generated aluminium hydroxide binds only a small amount of residual contaminants from the treated active volume to form the first product P1.2 (the mass ratio of mental from the consumable electrode to the bound contaminants is 2000 : 1 because the back-contamination of the volume by the release of contaminants from the deposits has decreased).

Subsequently, the first product P1.2 is separated from the treated active volume and mixed with the treated passive volume. The residual concentration of contaminants in the treated passive volume is reduced by 38% to form product P2.2 (the mass ratio of metal from the consumable electrode to the bound contaminants is 50 : 1). This product P2.2 is separated from the treated passive volume by standard methods. Optionally, Cycles 3 to 10 may be included, wherein the conditions of the first electrolysis remain identical to Cycle 2 and the first products P1.3 to P1.10 with 2000 : 1 purity grade are separated from the treated active volume.

The treated active volume after the last repeated cycle is discharged as purified water for further use. Alternatively, the treated active volume may also be mixed with the treated passive volume.

The final treatment is focused on the electrolysis-assisted removal of residual contaminants from the treated passive volume with such an amount of metal such that the purity grade of the third product P3 is identical to the purity grade of the second product P2, thus allowing these products to be mixed.

The treated passive volume is subjected to a second in electrolysis using an Al electrode, wherein the electrolysis is terminated after the release of 2.3 kg of Al from the consumable electrode into the treated passive volume to produce an equivalent mass of aluminium hydroxide. The generated aluminium hydroxide binds 93% of the residual amount of contaminants from the treated passive volume to form the third product P3 (the mass ratio of metal from the consumable electrode to the bound contaminants is 0.18 : 1). Subsequently, the third product P3 is separated from the final treated passive volume and the final treated passive volume is discharged as purified water for further use.

Products P2 and P3 (both of the same purity grade) may be mixed and from the resulting mixture of products of 0.18 : 1 purity grade it is possible, using standard methods, to further obtain Al₂O₃ with a mass fraction of at least 52%. From product P2.1 it is possible, using standard methods, to obtain Al₂O₃ with a mass fraction of at least 72%, and from product P2.2 it is possible to obtain Al₂O₃ with a mass fraction of at least 98%.

### Example 3

In the method according to example 2, water from the treated passive volume is replenished once prior to Cycle 2 to compensate for the loss of water in the formation of aluminium hydroxide and in the separation of products with a total volume of 12 l (due to the small amount of replenished water, the purity grade of the product P1.2 will be only minimally affected by contaminants from the treated passive volume). Alternatively, water from the treated passive volume may be continuously replenished during Cycle 2 to compensate for the loss of water during the formation of aluminium hydroxide (the purity grade of product P1.2 will be strongly dependent on the concentration of contaminants in the treated passive volume).

### Example 4

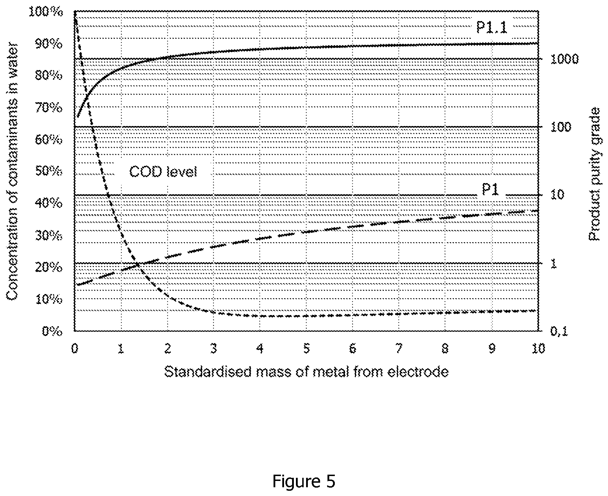

Figure 5 shows an example of a normalised calibration curve for the first products P1 and P1.1 for one type of water, wherein the contaminant concentration drop curve is the same; in repeated Cycle 1 a high purity grade is quickly achieved due to the significantly lower residual contaminant concentration.

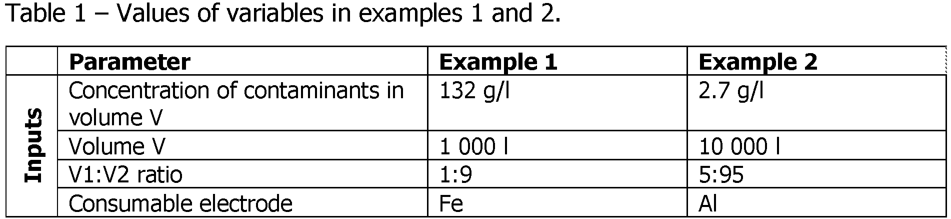

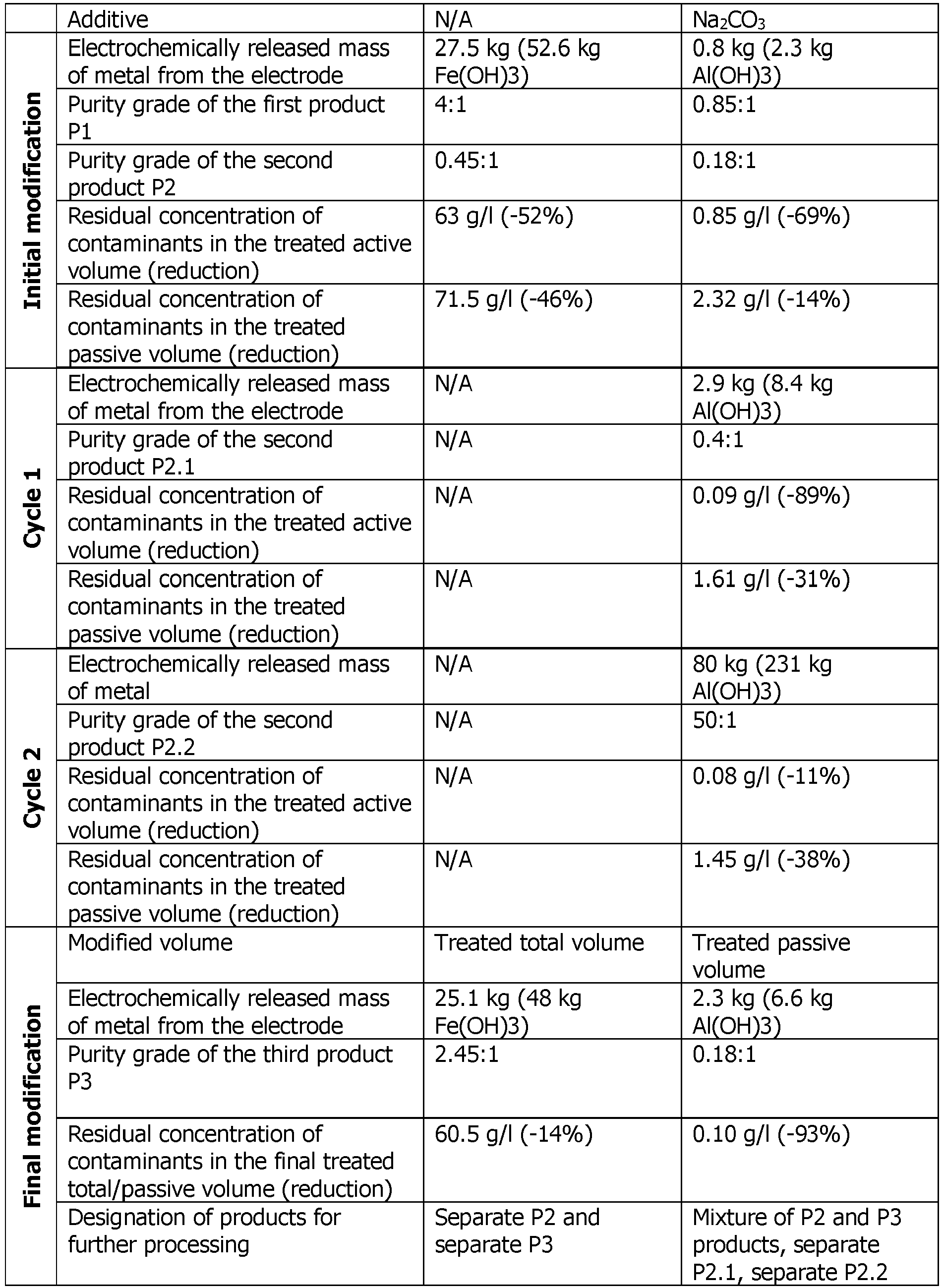

## Claims

1. A method of producing metal hydroxides in controlled purity grades from water having a contaminant concentration in a range of 0.1 to 500 g/l, **characterised in that** it comprises process steps:
a) dividing water of a total volume V into V1 : V2 in a ratio of 1 : 3 to 1 : 100, wherein V1 is an active water volume and V2 is a passive water volume;
b) a first electrolysis of the active water volume with an electrical conductivity of at minimum 0.5 mS/cm, using at least one consumable metal electrode - anode, to form metal hydroxide with bound contaminants in a treated active water volume; wherein the first electrolysis is carried out until a mass ratio of metal from the consumable electrode to the bound contaminants is 0.1 : 1 to 100 : 1; and
c) separation of the metal hydroxide with the bound contaminants from the treated active water volume to form a first product P1 and the treated active water volume;
d) mixing the first product P1 with the passive water volume, to form a metal hydroxide with bound contaminants in a treated passive water volume;
e) separation of the metal hydroxide with the bound contaminants from the treated passive water volume to form a second product P2 and the treated passive water volume;
f) a second electrolysis of the treated passive water volume, using at least one consumable metal electrode - anode, to form a metal hydroxide with bound contaminants in a final treated passive water volume; wherein the second electrolysis takes place until a mass ratio of a metal from the consumable electrode to bound contaminants is 0.1 : 1 to 100 : 1; and
g) a separation of the metal hydroxide with the bound contaminants from the final treated passive water volume to form a third product P3 and the final treated passive water volume.

2. The method according to claim 1, **characterised in that** the treated active water volume from step c) is repeatedly subjected to steps b) to e) 1 to n times, where n is an integer selected from an interval 2 to 100, preferably 10, to form the second products P2.1 to P2.n, followed by steps f) and g) to form the third product P3.

3. The method according to claim 2, **characterised in that** in the first repetition and each subsequent repetition of steps b) to e), the first electrolysis takes place until the mass ratio of the metal from the consumable electrode to the bound contaminants reaches a value in the range of 1 : 1 to 2000 : 1.

4. The method according to claim 1, **characterised in that** the treated active water volume from the step c) is repeatedly subjected to the steps b) and c) 1 to n times, where n is an integer selected from the interval 2 to 100, preferably 10, to form the first products P1.1 to P1.n suitable for the production of ceramic materials.

5. The method according to claim 4, **characterised in that** in the first repetition and each subsequent repetition of steps b) and c), the first electrolysis takes place until the mass ratio of the metal from the consumable electrode to the bound contaminants reaches a value in the range of 1 : 1 to 2000 : 1.

6. A method of producing metal hydroxides in controlled purity grades from water having a contaminant concentration in a range of 0.1 to 500 g/l, **characterised in that** it comprises process steps:
a) dividing water of a total volume V into V1 : V2 in a ratio of 1 : 3 to 1 : 100, wherein V1 is an active water volume and V2 is a passive water volume;
b) a first electrolysis of the active water volume with an electrical conductivity of at minimum 0.5 mS/cm, using at least one consumable metal electrode - anode, to form metal hydroxide with bound contaminants in a treated active water volume; wherein the first electrolysis is carried out until a mass ratio of metal from the consumable electrode to the bound contaminants is 0.1 : 1 to 100 : 1; and
b1)mixing the entire treated active water volume together with metal hydroxide with bound contaminants with the passive water volume; and
e) separation of the metal hydroxide with the bound contaminants from a treated total water volume to form the second product P2 and the treated total water volume;
f) a second electrolysis of the treated total water volume, using at least one consumable metal electrode - anode, to form a metal hydroxide with bound contaminants in a final treated total water volume; wherein the second electrolysis is carried out until the mass ratio of metal from the consumable electrode to the bound contaminants is 0.1 : 1 to 100 : 1; and
g) separation of the metal hydroxide with the bound contaminants from the final treated total water volume to form the third product P3 and the final treated total water volume.

7. The method according to any of the preceding claims, **characterised in that** the treated active water volume and/or the final treated passive water volume and/or the final treated total water volume is removed as purified water suitable for further use.

8. The method according to any one of the preceding claims, **characterised in that** a part of the treated passive/total water volume from step e) is added to step b) or to the treated active water volume from step c):
- continuously, at a rate corresponding to the loss of active water volume during the first electrolysis in step b), and/or
- a one-time replenishment with a volume corresponding to the loss of active water volume after step c).

9. The method according to any one of claims 1 to 6 or 8, **characterised in that** the treated active water volume from step c) is mixed with the treated passive water volume obtained in step e).

10. The method according to any one of the preceding claims, **characterised in that** an additive is added to the active water volume before or during step b) to increase the electrical conductivity of the water to a level of at least 0.5 mS/cm, preferably to a level of 5 mS/cm to 100 mS/cm, wherein the additive is preferably NaCl, Na₂CO₃, or Na₂SO₄, or any combination thereof.

11. The method according to any one of the preceding claims, **characterised in that** the consumable electrode is a metal selected from the group including Fe, Al, Zn, Mg, Cu, and alloys thereof, preferably Al, more preferably Fe.

12. The method for treating wastewater comprising the method according to any one of the preceding claims.

## Patentansprüche

1. Verfahren zur Herstellung von Metallhydroxiden in kontrollierten Reinheitsgraden aus Wasser mit einer Verunreinigungskonzentration im Bereich von 0,1 bis 500 g/l, **dadurch gekennzeichnet, dass** es folgende Verfahrensschritte umfasst:
a) Aufteilung von Wasser mit einem Gesamtvolumen V in V1 und V2 im Verhältnis von 1 : 3 bis 1 : 100, wobei V1 ein aktives Wasservolumen ist und V2 ein passives Wasservolumen ist;
b) eine erste Elektrolyse des aktiven Wasservolumens mit einer elektrischen Leitfähigkeit von mindestens 0,5 mS/cm unter Verwendung mindestens einer verbrauchbaren Metallelektrode - einer Anode -, um Metallhydroxid mit gebundenen Verunreinigungen in einem behandelten aktiven Wasservolumen zu bilden; wobei die erste Elektrolyse durchgeführt wird, bis ein Massenverhältnis von Metall aus der verbrauchbaren Elektrode zu den gebundenen Verunreinigungen 0,1 : 1 bis 100 : 1 beträgt; und
c) Abtrennung des Metallhydroxids mit den gebundenen Verunreinigungen aus dem behandelten aktiven Wasservolumen, um ein erstes Produkt P1 und das behandelte aktive Wasservolumen zu bilden;
d) Vermischen des ersten Produkts P1 mit dem passiven Wasservolumen, um ein Metallhydroxid mit gebundenen Verunreinigungen in einem behandelten passiven Wasservolumen zu bilden;
e) Abtrennung des Metallhydroxids mit den gebundenen Verunreinigungen aus dem behandelten passiven Wasservolumen, um ein zweites Produkt P2 und das behandelte passive Wasservolumen zu bilden;
f) eine zweite Elektrolyse des behandelten passiven Wasservolumens unter Verwendung mindestens einer verbrauchbaren Metallelektrode - einer Anode -, um ein Metallhydroxid mit gebundenen Verunreinigungen in einem endgültigen behandelten passiven Wasservolumen zu bilden; wobei die zweite Elektrolyse so lange stattfindet, bis ein Massenverhältnis von Metall aus der verbrauchbaren Elektrode zu gebundenen Verunreinigungen 0,1 : 1 bis 100 : 1 beträgt; und
g) Abtrennung des Metallhydroxids mit den gebundenen Verunreinigungen aus dem behandelten passiven Wasservolumen, um ein drittes Produkt P3 und das endgültige behandelte passive Wasservolumen zu bilden.

2. Verfahren nach Anspruch 1, **dadurch gekennzeichnet, dass** das behandelte aktive Wasservolumen aus Schritt c) wiederholt 1 bis n-Mal den Schritten b) bis e) unterzogen wird, wobei n eine ganze Zahl aus dem Intervall von 2 bis 100, vorzugsweise 10, ist, um die zweiten Produkte P2.1 bis P2.n zu bilden, gefolgt von den Schritten f) und g), um das dritte Produkt P3 zu bilden.

3. Verfahren nach Anspruch 2, **dadurch gekennzeichnet, dass** bei der ersten Wiederholung und jeder nachfolgenden Wiederholung der Schritte b) bis e) die erste Elektrolyse so lange stattfindet, bis das Massenverhältnis des Metalls aus der verbrauchbaren Elektrode zu den gebundenen Verunreinigungen einen Wert im Bereich von 1 : 1 bis 2000 : 1 erreicht.

4. Verfahren nach Anspruch 1, **dadurch gekennzeichnet, dass** das behandelte aktive Wasservolumen aus Schritt c) wiederholt 1 bis n-Mal den Schritten b) und c) unterzogen wird, wobei n eine ganze Zahl aus dem Intervall von 2 bis 100, vorzugsweise 10, ist, um die ersten Produkte P1.1 bis P1.n zu bilden, die zur Herstellung von Keramikmaterialien geeignet sind.

5. Verfahren nach Anspruch 4, **dadurch gekennzeichnet, dass** bei der ersten Wiederholung und jeder nachfolgenden Wiederholung der Schritte b) und c) die erste Elektrolyse so lange stattfindet, bis das Massenverhältnis des Metalls aus der verbrauchbaren Elektrode zu den gebundenen Verunreinigungen einen Wert im Bereich von 1 : 1 bis 2000 : 1 erreicht.

6. Verfahren zur Herstellung von Metallhydroxiden in kontrollierten Reinheitsgraden aus Wasser mit einer Verunreinigungskonzentration im Bereich von 0,1 bis 500 g/l, **dadurch gekennzeichnet, dass** es folgende Verfahrensschritte umfasst:
a) Aufteilung von Wasser mit einem Gesamtvolumen V in V1 und V2 im Verhältnis von 1 : 3 bis 1 : 100, wobei V1 das aktive Wasservolumen und V2 ein passives Wasservolumen ist;
b) eine erste Elektrolyse des aktiven Wasservolumens mit einer elektrischen Leitfähigkeit von mindestens 0,5 mS/cm unter Verwendung mindestens einer verbrauchbaren Metallelektrode - einer Anode -, um Metallhydroxid mit gebundenen Verunreinigungen in einem behandelten aktiven Wasservolumen zu bilden; wobei die erste Elektrolyse durchgeführt wird, bis ein Massenverhältnis von Metall aus der verbrauchbaren Elektrode zu den gebundenen Verunreinigungen 0,1 : 1 bis 100 : 1 beträgt; und
b1) Vermischen des gesamten behandelten aktiven Wasservolumens zusammen mit dem Metallhydroxid mit gebundenen Verunreinigungen mit dem passiven Wasservolumen; und
e) Abtrennung des Metallhydroxids mit den gebundenen Verunreinigungen aus einem behandelten Gesamtwasservolumen, um das zweite Produkt P2 und das behandelte Gesamtwasservolumen zu bilden;
f) eine zweite Elektrolyse des behandelten Gesamtwasservolumens, unter Verwendung mindestens einer verbrauchbaren Metallelektrode - Anode - zur Bildung eines Metallhydroxids mit gebundenen Verunreinigungen in einem endgültigen behandelten Gesamtwasservolumen; wobei die zweite Elektrolyse durchgeführt wird, bis das Massenverhältnis von Metall aus der verbrauchbaren Elektrode zu den gebundenen Verunreinigungen 0,1 : 1 bis 100 : 1 beträgt; und
g) Abtrennung des Metallhydroxids mit den gebundenen Verunreinigungen aus dem endgültigen behandelten Gesamtwasservolumen, um das dritte Produkt P3 und das endgültige behandelte Gesamtwasservolumen zu bilden.

7. Verfahren nach einem der vorstehenden Ansprüche, **dadurch gekennzeichnet, dass** das behandelte aktive Wasservolumen und/oder das endgültige behandelte passive Wasservolumen und/oder das endgültige behandelte Gesamtwasservolumen als für die weitere Verwendung geeignetes gereinigtes Wasser abgeführt wird.

8. Verfahren nach einem der vorhergehenden Ansprüche, **dadurch gekennzeichnet, dass** ein Teil des behandelten Passiv- bzw. Gesamtwasservolumens aus Schritt e) zu Schritt b) oder dem behandelten Aktivwasservolumen aus Schritt c) hinzugefügt wird:
- kontinuierlich mit einer Rate, die dem Verlust an Aktivwasservolumen während der ersten Elektrolyse in Schritt b) entspricht, und/oder
- einmalig mit einem Volumen aufgefüllt wird, das dem Verlust an Aktivwasservolumen nach Schritt c) entspricht.

9. Verfahren nach einem der Ansprüche 1 bis 6 oder 8, **dadurch gekennzeichnet, dass** das behandelte aktive Wasservolumen aus Schritt c) mit dem in Schritt e) erhaltenen behandelten passiven Wasservolumen vermischt wird.

10. Verfahren nach einem der vorstehenden Ansprüche, **dadurch gekennzeichnet, dass** dem aktiven Wasservolumen vor oder während Schritt b) ein Additiv zugesetzt wird, um die elektrische Leitfähigkeit des Wassers auf einen Wert von mindestens 0,5 mS/cm, vorzugsweise auf einen Wert von 5 mS/cm bis 100 mS/cm, zu erhöhen, wobei das Additiv vorzugsweise NaCl, Na₂CO₃ oder Na₂SO₄ oder eine beliebige Kombination davon ist.

11. Verfahren nach einem der vorstehenden Ansprüche, **dadurch gekennzeichnet, dass** die Verbrauchselektrode ein Metall ist, das aus der Gruppe ausgewählt ist, die Fe, Al, Zn, Mg, Cu und deren Legierungen umfasst, vorzugsweise Al, noch bevorzugter Fe.

12. Verfahren zur Abwasserbehandlung, das das Verfahren nach einem der vorstehenden Ansprüche umfasst.

## Revendications

1. Procédé de production d'hydroxydes métalliques en degrés de pureté contrôlés à partir d'eau ayant une concentration en contaminants comprise entre 0,1 et 500 g/l, **caractérisé en ce qu'**il comprend les étapes suivantes :
a) division d'un volume total d'eau V en V1 et V2 dans un rapport de 1 : 3 à 1 : 100, V1 étant un volume d'eau active et V2 un volume d'eau passive ;
b) une première électrolyse du volume d'eau active avec une conductivité électrique d'au moins 0,5 mS/cm, en utilisant au moins une électrode métallique consommable - anode, pour former de l'hydroxyde métallique avec des contaminants liés dans un volume d'eau active traitée ; ladite première électrolyse étant réalisée jusqu'à ce que le rapport de masse entre le métal provenant de l'électrode consommable et les contaminants liés atteigne une valeur allant de 0,1 : 1 à 100 : 1 ; et
c) séparation de l'hydroxyde métallique avec les contaminants liés du volume d'eau active traitée, pour former un premier produit P1 et le volume d'eau active traitée ;
d) mélange du premier produit P1 avec le volume d'eau passive, pour former de l'hydroxyde métallique avec des contaminants liés dans un volume d'eau passive traitée ;
e) séparation de l'hydroxyde métallique avec les contaminants liés du volume d'eau passive traitée, pour former un deuxième produit P2 et le volume d'eau passive traitée ;
f) une deuxième électrolyse du volume d'eau passive traitée, en utilisant au moins une électrode métallique consommable - anode, pour former de l'hydroxyde métallique avec des contaminants liés dans un volume final d'eau passive traitée ; ladite deuxième électrolyse étant réalisée jusqu'à ce que le rapport de masse entre le métal provenant de l'électrode consommable et les contaminants liés atteigne une valeur allant de 0,1 : 1 à 100 : 1 ; et
g) séparation de l'hydroxyde métallique avec les contaminants liés du volume d'eau passive traitée, pour former un troisième produit P3 et le volume final d'eau passive traitée ;

2. Procédé selon la revendication 1, **caractérisé en ce que** le volume d'eau active traitée provenant de l'étape c) est soumis à plusieurs reprises aux étapes b) à e), de 1 à n fois, où n est un nombre entier compris entre 2 et 100, de préférence 10, pour former le deuxième produit de P2.1 à P2.n, suivi des étapes f) et g) pour former le troisième produit P3.

3. Procédé selon la revendication 1, **caractérisé en ce que**, lors de la première répétition et de chaque répétition suivante des étapes b) à e), la première électrolyse a lieu jusqu'à ce que le rapport de masse entre le métal provenant de l'électrode consommable et les contaminants liés atteigne une valeur allant de 1 : 1 à 2000 : 1.

4. Procédé selon la revendication 1, **caractérisé en ce que** le volume d'eau active traitée provenant de l'étape c) est soumis à plusieurs reprises aux étapes b) et c), de 1 à n fois, où n est un nombre entier compris entre 2 et 100, de préférence 10, pour former le premier produit de P1.1 à P1.n, apte à la production de matériaux céramiques.

5. Procédé selon la revendication 4, **caractérisé en ce que**, lors de la première répétition et de chaque répétition suivante des étapes b) et c), la première électrolyse a lieu jusqu'à ce que le rapport de masse entre le métal provenant de l'électrode consommable et les contaminants liés atteigne une valeur allant de 1 : 1 à 2000 : 1.

6. Procédé de production d'hydroxydes métalliques en degrés de pureté contrôlés à partir d'eau ayant une concentration en contaminants comprise entre 0,1 et 500 g/l, **caractérisé en ce qu'**il comprend les étapes suivantes :
a) division d'un volume total d'eau V en V1 et V2 dans un rapport de 1 : 3 à 1 : 100, V1 étant un volume d'eau active et V2 un volume d'eau passive ;
b) une première électrolyse du volume d'eau active avec une conductivité électrique d'au moins 0,5 mS/cm, en utilisant au moins une électrode métallique consommable - anode, pour former de l'hydroxyde métallique avec des contaminants liés dans un volume d'eau active traitée ; ladite première électrolyse étant réalisée jusqu'à ce que le rapport de masse entre le métal provenant de l'électrode consommable et les contaminants liés atteigne une valeur allant de 0,1 : 1 à 100 : 1 ; et
b1) mélange de la totalité du volume d'eau active traitée, y compris l'hydroxyde métallique avec les contaminants liés, avec le volume d'eau passive ; et
e) séparation de l'hydroxyde métallique avec les contaminants liés du volume d'eau totale traitée, pour former un deuxième produit P2 et le volume d'eau totale traitée ;
f) une deuxième électrolyse du volume d'eau totale traitée, en utilisant au moins une électrode métallique consommable - anode, pour former de l'hydroxyde métallique avec des contaminants liés dans un volume final d'eau totale traitée ; ladite deuxième électrolyse étant réalisée jusqu'à ce que le rapport de masse entre le métal provenant de l'électrode consommable et les contaminants liés atteigne une valeur allant de 0,1 : 1 à 100 : 1 ; et
g) séparation de l'hydroxyde métallique avec les contaminants liés du volume d'eau totale traitée, pour former un troisième produit P3 et le volume final d'eau totale traitée.

7. Procédé selon l'une quelconque des revendications précédentes, **caractérisé en ce que** le volume d'eau active traitée et/ou le volume final d'eau passive traitée et/ou le volume final d'eau totale traitée est retiré en tant qu'eau purifiée apte à une utilisation ultérieure.

8. Procédé selon l'une quelconque des revendications précédentes, **caractérisé en ce qu'**une partie du volume d'eau passive ou totale traitée provenant de l'étape e) est ajoutée à l'étape b) ou au volume d'eau active traitée provenant de l'étape c) :
- de manière continue, selon un débit correspondant à la perte de volume d'eau active lors de la première électrolyse dans l'étape b), et/ou
- un appoint unique d'un volume correspondant à la perte de volume d'eau active après l'étape c).

9. Procédé selon l'une quelconque des revendications de 1 à 6 ou 8, **caractérisé en ce que** le volume d'eau active traitée provenant de l'étape c) est mélangé avec le volume d'eau passive traitée obtenu dans l'étape e).

10. Procédé selon l'une quelconque des revendications précédentes, **caractérisé en ce qu'**un additif est ajouté au volume d'eau active avant ou pendant l'étape b), afin d'augmenter la conductivité électrique jusqu'à une valeur d'au moins 0,5 mS/cm, de préférence comprise entre 5 mS/cm et 100 mS/cm, l'additif étant de préférence NaCl, Na₂CO₃ ou Na₂SO₄ ou toute combinaison de ceux-ci.

11. Procédé selon l'une quelconque des revendications précédentes, **caractérisé en ce que** l'électrode consommable est un métal sélectionné parmi le groupe comprenant Fe, Al, Zn, Mg, Cu et leurs alliages, de préférence Al, et plus particulièrement Fe.

12. Procédé de traitement des eaux usées, comprenant le procédé selon l'une quelconque des revendications précédentes.
